**Europäisches Patentamt**

**European Patent Office**

**Office européen des brevets**

(11) Publication number: **0 142 539**
**B1**

(12) **EUROPEAN PATENT SPECIFICATION**

(45) Date of publication of patent specification: **30.08.89**

(51) Int. Cl.⁴: **H 05 B 3/36**

(21) Application number: **84902005.2**

(22) Date of filing: **11.05.84**

(86) International application number:
**PCT/FI84/00034**

(87) International publication number:
**WO 84/04647 22.11.84 Gazette 84/27**

(54) **METHOD AND APPARATUS FOR MANUFACTURING A HEATER.**

(30) Priority: **11.05.83 FI 831653**

(43) Date of publication of application:
**29.05.85 Bulletin 85/22**

(45) Publication of the grant of the patent:
**30.08.89 Bulletin 89/35**

(84) Designated Contracting States:
**DE GB SE**

(56) References cited:
**CH-A- 483 771**
**FR-A-2 495 426**
**SE-A-78 065 430**
**US-A-2 548 467**

(73) Proprietor: **MELA, Martti**
**Oulon Yliopisto Biofysiikan laitos Linnamaa**
**SF-90570 Oulu 57 (FI)**

(72) Inventor: **MELA, Martti**
**Oulon Yliopisto Biofysiikan laitos Linnamaa**
**SF-90570 Oulu 57 (FI)**

(74) Representative: **Milhench, Howard Leslie et al**
**R.G.C. Jenkins & Co. 26 Caxton Street**
**London SW1H 0RJ (GB)**

Courier Press, Leamington Spa, England.

## Description

The invention relates to a method and apparatus for manufacturing a heating element which comprises an uninsulated wire embedded within a material having thermoplastic properties.

There are a number of methods and apparatus known to those possessed of the appropriate skills in the art of heating element manufacture. For example, CH—A—483771 discloses an arrangement in which wire tensioned between rollers is heated by electrical current before being pressed into a sheet of thermoplastics material. In this arrangement a further roller is provided to seal the channel formed when the heated wire is pressed into the material thereby to embed the wire in the material.

The arrangement of CH—A—483771 is limited in that it is intended for use as a hand operated machine and in order for the embedded wire to follow a convoluted path, thereby increasing the density of the wire in the material and the heating capacity of the finished heating element, the user must move the machine along the required path. Furthermore, a substantial length of wire is heated before insertion into the material and this can result in problems in manufacture if the wire oxidises.

In US—A—2,548,467 an apparatus is shown for sandwiching an insulated resistance wire between two layers of fabric material. The insulated wire is wound between support members provided at either end of one of two elongate heated rollers and the wire is sandwiched between the fabric layers by passing them between the heated rollers which melts the insulation and bonds it to the fabric layer.

The present invention aims to provide a solution to the abovementioned problems in the manufacture of heating elements comprising an uninsulated wire embedded within a thermoplastics material.

In accordance with one aspect of the present invention there is provided a method of manufacturing a heating element which comprises an uninsulated electrically resistive wire embedded within a sheet of material having thermoplastic properties, said method comprising heating the wire by passage of an electrical current therethrough and embedding the heated wire in the thermoplastics material by means of a rotatable member which guides the wire into contact with the thermoplastics material, as known for example from CH—A—483771 abovementioned, which is characterized in accordance with the invention in that the wire is wound in a convoluted path between support members provided at axially spaced-apart end portions of the major surface of a cylindrical drum constituting said rotatable member, the wire is heated by passing an electrical current between selected support members on opposite end portions of the drum only shortly before the portion of the wire that is supported between the selected support members is carried by the rotation of the drum into contact with the thermoplastics material so as to become embedded therein, and thereafter such portion of the wire is released from said selected support members so that the portion remains embedded in the thermoplastics material.

The invention also provides an apparatus for manufacturing a heating element which comprises an uninsulated electrically resistive wire embedded within a sheet of material having thermoplastic properties, said apparatus comprising heating means for heating the wire by passage of an electrical current therethrough and a rotatable member for guiding the wire into contact with the thermoplastics material thereby to embed the heated wire in the thermoplastics material, as known for example from CH-A-483771 abovementioned, which is characterised in accordance with the invention in that support members are provided at axially spaced-apart end portions of the major surface of a cylindrical drum constituting said rotatable member, means are provided for winding the wire in a convoluted path between the support members, the heating means is adapted to pass an electrical current between selected support members on opposite end portions of the drum only shortly before the portion of the wire that is supported between the selected support members is carried by the rotation of the drum into contact with the thermoplastics material so as to become embedded therein, and the support members are arranged to release such portion of the wire thereafter so that the portion remains embedded in the thermoplastics material.

Further inventive features are set forth with particularity in the appended subordinate claims.

A sheet or band heatable by means of an electric resistance wire and prepared by way of the present invention can be used as it is or small primary elements of appropriate size can be cut off from a roll and used for a variety of purposes. Such elements may be used coated with a layer or layers of cloth in or on, e.g., seats, in particular car seats, covers, clothes, e.g. diver's suits, gloves, shoes, etc. for heating them and for many other similar or corresponding purposes. The elements are heated by means of an electric current, preferably a low voltage current flowing through the resistance wires contained therein.

In order that the invention may be well understood an embodiment will be described in the following with reference to the accompanying schematic illustrations, in which:

Figure 1 shows an apparatus for carrying out the method as viewed from behind;

Figure 2 shows the same apparatus as in Fig. 1 but as viewed from one side;

Figure 3 shows an enlarged partial section view of the apparatus;

Figure 4 shows a view of a centre piece which forms part of the apparatus; and

Figure 5 shows an element band manufactured by the apparatus in accordance with the method.

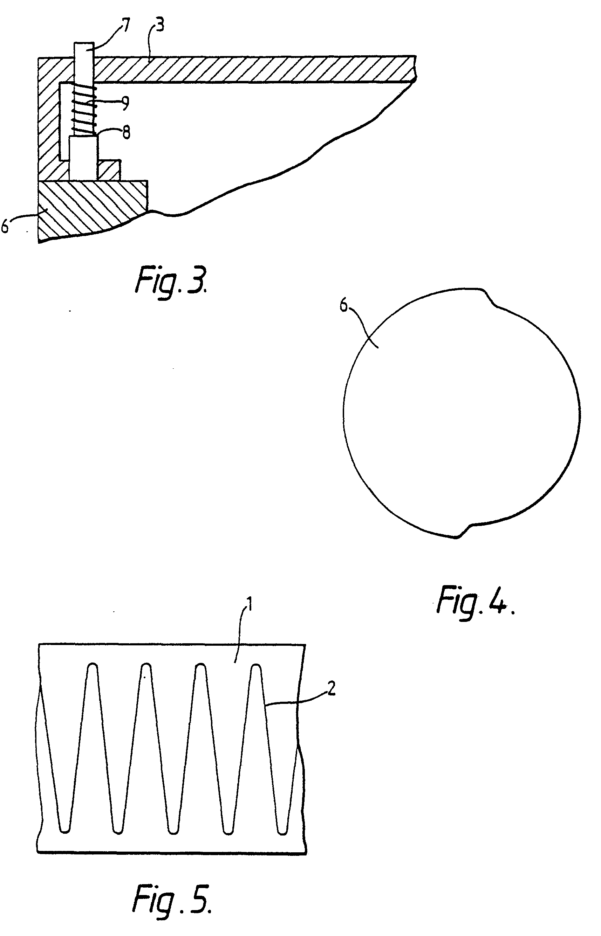

The product shown in Fig. 5 is a band of uniform width, of a thickness, e.g., of 1 mm or less and of a width, e.g., of 5 to 10 cm. The material of the band is of a flexible thermoplastic material, which may be a solid or a perforated structure. The material may also be provided as a mesh structure in which the area of the meshes or openings in the net is, e.g., about one half or more than one half of the overall area of the net. The meshes in the net may be small, e.g. about 1 to 2 sq.mm.

Into the band a thin resistance wire (2) has been pressed whilst hot, the said wire winding back and forth in the band 1 in the way shown in Fig. 5. The resistance wire may be thin, e.g. Φ about 0.1 mm or less. Out of a continuous element band it is possible to make primary elements by cutting it into pieces of appropriate length, for placing into the object to be heated. Several primary elements may be connected electrically in parallel to form a network of heating elements and the supply of current into the resistance wires can be arranged, e.g., from a transformer, from a rectifier, from an accumulator, or from a battery, via supply conductors common to the primary elements. Owing to the low voltage (e.g., 12 to 24 V) the connections do not require specific protection and the heat that is generated does not melt the plastic.

The resistance wires for the primary element may also be manufactured of an appropriate iron alloy besides the usual metal alloys used for this purpose in prior art, in which case their cost is more favourable than the cost of wires made of a manganese alloy or equivalent. When an alloy of iron is used, a favourable dependence on the temperature is obtained for the resistance wire. An increase in temperature increases the resistance value of the primary element and, with constant-voltage supply, the output is reduced. In this way, a local self-control property is obtained for the network which results in a more even isothermic distribution of temperature within the device being heated.

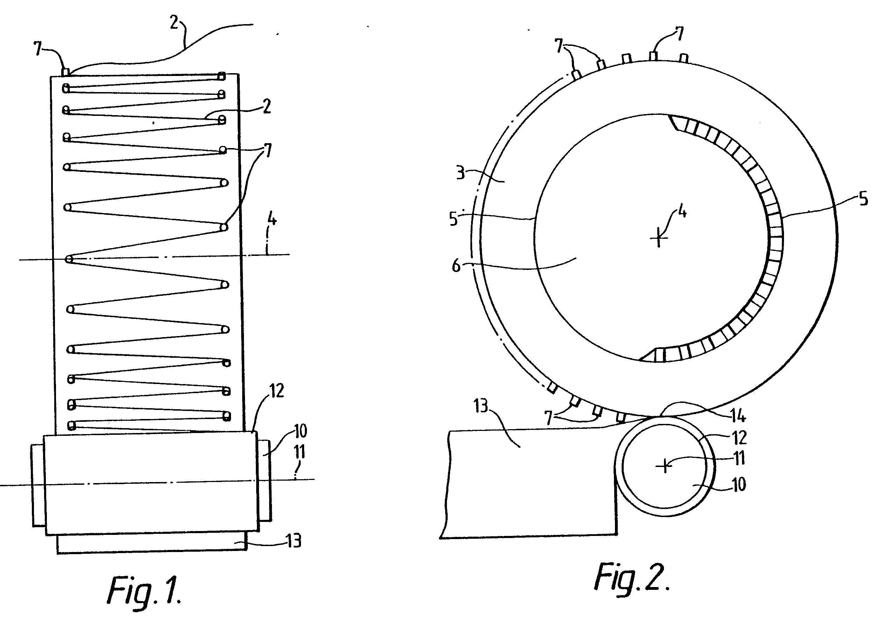

As is shown in Figures 1 and 2 the apparatus for the preparation of the element band comprises a drum (3), which can be rotated on its shaft (4) attached to the frame of the machine (not shown in the drawing), e.g., by means of a motor (not shown). The end walls of the drum extend as a flange towards the centre to define the circumference (5) of a circle inside which there are, at each end of the drum, centre pieces (6) stationarily mounted to the frame, the shape of the said centre pieces being shown in Fig. 4 as viewed in the direction of viewing of Fig. 2.

In the major face of the drum, near its edges, there are uniformly spaced radial holes and pins (7) in the holes. Fig. 3 is an enlarged and partial view of an axial vertical section through Fig. 2 at the topmost pin (7) shown therein. The pin (7) is of circular section, and having a thicker bottom portion extending away from a shoulder (8) downwards towards the centre piece (6). Between the shoulder and the inside face of the drum there is a spiral spring (9) around the pin, which spring presses the pin downwards against the stationary guide piece (6) and the pin is capable of moving in its longitudinal direction in the corresponding holes in the drum.

When the drum revolves, the guide pieces (6) push the outermost ends of the pins (7) out from the major face of the drum, as is shown in Fig. 2, on the leftside portion of the drum. Correspondingly, on the right-side portion of the drum, by the effect of the springs (9), the outermost ends of the pins have been pulled to the level of, or slightly inside, the outer face of the drum as the lower ends of the pins follow the profile of the guide piece (6).

Underneath the drum (3) there is a cylindrical roll (10) which can revolve around its shaft (11) attached to the frame. The roll (10) is coated with a resilient layer (12), e.g., of rubber, which is pressed against the drum. In front of the roll there is a feeding table (13). The upper part of the end of the table placed next to the roll is shaped to curve downwardly so that it runs along the major face of the roll and extends to the proximity of the contact point 14 between the roll and the drum.

When an element band is being prepared by means of the apparatus the drum (3) is rotated, according to Fig. 2, anti-clockwise. The resistance wire (2) is threaded, e.g., by means of a separate threading device (not shown in the figure) around the pins (7) in the upper portion of the drum so that, on the face of the drum, the wire is received in a form somewhat resembling the toothing of a saw, shown in Fig. 1. The wire is on the drum in this form even when the roll (10) presses the thermoplastic plastic band fed from the table (13) to between the drum (3) and the roll (10, 12).

By means of electric conductors and connecting devices (not shown in the drawings) an appropriate electric voltage is connected between two pins (7) placed on the drum. One of these pins is close to the face of the feeding table, or even in contact with it, and the other one of the pins is at an appropriate distance higher on the drum. Inside the drum there are connector means of a construction in itself known, e.g. similar to those in a DC motor, which, when the drum revolves and when the pins are in and close to the said locations, connect the voltage to the said pins. The current provided by the electric voltage in the resistance wire between the pins heats the resistance wire appropriately so that, being pressed by the roll (10), it is well pressed into the thermoplastic plastic film or net when it is fed in between the roll and the drum (3). The heated wire softens and melts the plastic layer only locally so that this portion is, soon after the wire has been submerged into it, again stiffened after the band leaves the space between the drum and the roll, while the resistance wire remains inside the thermoplastic. In this way, this apparatus permits continuous production of long element bands. Owing to the elasticity of the material the bands can be wound onto rolls, from which suitable pieces can then be cut off when required. If it is so desired, an element band manufactured in the above way may still be coated with an additional layer or layers of plastic.

If required, the apparatus described above may be connected with control devices (not shown in the drawings) by means of which it is possible to control, e.g., at what positions in the rotation of the drum the pins are connected to the electric voltage. The resistance wire is heated rapidly only slightly before it is pressed into the plastic. In such a case hardly any oxidizing has time to take place, and the extending of the wire by the effect of heat does not have time to become detrimental.

If necessary, the position of the guide piece (6) may also be adjusted by turning it around its axis and then locking it in its position. This has an effect on the position at which the pins are retracted into the drum and at what position they come out of the drum. Of course other adjustments are also purposeful, such as adjustments of the voltage and of the intensity of the current, etc. The current may be adjusted in relation to the speed of rotation and to the position of the drum. The value of the current depends on the properties of the thermoplastic material and on the speed of rotation of the drum.

## Claims

1. A method of manufacturing a heating element which comprises an uninsulated electrically resistive wire (2) embedded within a sheet of material (1) having thermoplastic properties, said method comprising heating the wire (2) by passage of an electrical current therethrough and embedding the heated wire in the thermoplastics material by means of a rotatable member (3) which guides the wire into contact with the thermoplastics material, characterised in that the wire (2) is wound in a convoluted path between support members (7) provided at axially spaced-apart end portions of the major surface of a cylindrical drum constituting said rotatable member (3), the wire is heated by passing an electrical current between selected support members on opposite end portions of the drum (3) only shortly before the portion of the wire (2) that is supported between the selected support members is carried by the rotation of the drum into contact with the thermoplastics material so as to become embedded therein, and thereafter such portion of the wire is released from said selected support members so that the portion remains embedded in the thermoplastics material (1).

2. An apparatus for manufacturing a heating element which comprises an uninsulated electrically resistive wire (2) embedded within a sheet of material (1) having thermoplastic properties, said apparatus comprising heating means for heating the wire (2) by passage of an electrical current therethrough and a rotatable member (3) for guiding the wire into contact with the thermoplastics material thereby to embed the heated wire in the thermoplastics material, characterised in that support members (7) are provided at axially spaced-apart end portions of the major surface of a cylindrical drum constituting said rotatable member (3), means are provided for winding the wire (2) in a convoluted path between the support members (7), the heating means is adapted to pass an electrical current between selected support members on opposite end portions of the drum (3) only shortly before the portion of the wire (2) that is supported between the selected support members is carried by the rotation of the drum (3) into contact with the thermoplastics material so as to become embedded therein, and the support members are arranged to release such portion of the wire thereafter so that the portion remains embedded in the thermoplastics material (1).

3. The apparatus according to claim 2, characterised in that the rotatable member (3) is arranged to cooperate with an elongate roller (10) to embed the wire (2) in the thermoplastics material (1) and each of the support members (7) is arranged to retract into the body of the rotatable member (3) as the lateral portion of the major surface thereof at which the support member is provided rotates into co-operation with the roller (10).

4. The apparatus according to claim 3, characterised in that a stationary guide piece (6) is provided within the rotatable member, the guide piece (6) having a profile which is such as to urge the support members (7) outwardly when the corresponding lateral surface portion is not in co-operation with the roller (10).

5. The apparatus according to claim 4 characterised in that the support members (7) are biassed by resilient means (9) to retract into the drum member when not urged outwardly by the guide piece profile.

## Patentansprüche

1. Verfahren zur Herstellung eines Heizgerätes mit einem nicht isolierten elekrischen Widerstandsdraht, eingebettet in einer Materialbahn (1) mit thermoplastischen Eigenschaften, wobei der Draht (2) vermittels elektrischen Stromes, der durch ihn hindurchgeschickt wird, erwärmt wird und der erwährmte Draht in das thermoplastische Material vermittels eines sich drehenden Führungsteiles (3) eingebettet wird indem der Führungsteil den Draht mit dem thermoplastischen Material in Berührung bringt, dadurch gekennzeichnet, daß der Draht (2) in gewundener Weise zwischen Zapfen (7) gewickelt wird, die achsial getrennt auf den Randteilen der Fläche einer zylindrischen Trommel befestigt sind, die das Führungsteil (3) bildet, worauf der Draht (2) elektrisch erwärmt wird zwischen ausgewählten Zapfen (7) kurz bevor der Teil des Drahtes (2), der zwischen den Zapfen gespannt ist, mit dem thermoplastischen Material in Berührung gebracht und so darin eingebettet wird, danach wird dieser Teil des Drahtes von den Zapfen freigegeben, so daß das Teil in dem thermoplastischen Material (1) eingebettet bleibt.

2. Vorrichtung zur Herstellung eines Heizgerätes unter Verwendung eines nicht isolierten elektrischen Widerstandsdrahtes eingekettet in einer Materialbahn (1) mit thermoplastischen Eigenschaften, wobei die Vorrichtung Heizeinrichtungen zur Erwärmung des Drahtes (2) mit elektrischen Strom, der durch den Draht geschickt wird, umfasst und ein sich drehendes Führungsteil (3), welches den Draht dem thermoplastischen Material zuführt und mit diesem in Berührung bringt, wodurch der Draht in das thermoplastische Material engebettet wird, dadurch gekennzeichnet, daß Zapfen (7) in achsial getrennter Anordnung in den Randteilen einer zylindrischen Mantelfläche einer Trommel angeordnet sind, die das Führungsteil (3) bildet, daß Einrichtungen vorgesehen sind, die den Draht (2) in gesonderter Weise auf die Zapfen wickeln, daß Heizeinrichtungen vorgesehen sind, die elektrischen Strom ausgewählten, sich gegenüber liegenden Zapfen auf der drehbaren Trommel zuführen, kurz bevor der Teil des Drahtes, der zwischen den ausgewählten Zapfen liegt, von der drehbaren Trommel mit dem thermoplastischen Material in Berührung gelangt und so in das Material sich einbettet und daß die Zapfen so ausgebildet sind, daß sie den Draht freigeben, wenn dieser in das thermoplastische Material (1) eingebettet ist.

3. Vorrichtung nach Anspruch 2, dadurch gekennzeichnet, daß das Führungsteil (3) mit einer Walze (10) zusammenwirkt, um den Draht (2) in das thermoplastische Material einzubetten und daß die Zapfen (7) in die das Führungsteil (3) bildende Trommel zurücktreten, wenn diese mit der Walze (10) in Berührung treten.

4. Vorrichtung nach Anspruch 3, dadurch gekennzeichnet, daß in der drehbaren Trommel des Führungsteils (3) ein stationäres Teil (6) vorgesehen ist, welches so geformt ist, daß es die Zapfen (7) nach außen drückt, wenn das entsprechende Teil der Manteloberfläche der Trommel nicht mit der Walze (10) in Berührung ist.

5. Vorrichtung nach Anspruch 4, dadurch gekennzeichnet, daß die Zapfen (7) federbelastet (9) sind, wodurch die Zapfen in die Trommel hineingezogen werden, wenn sie nicht durch das stationäre Teil (6) nach außen gedrückt sind.

**Revendications**

1. Procédé pour fabriquer un élément chauffant qui comporte un fil non isolé (2) présentant une résistivité électrique et enrobé dans une feuille d'une matière (1) possédant des propriétés thermoplastiques, ledit procédé consistant à chauffer le fil (2) en y faisant passer un courant électrique et à enrober le fil chauffé dans la matière thermoplastique au moyen d'un organe rotatif (3) qui amène le fil en contact avec la matière thermoplastique, caractérisé en ce qu'on enroule le fil (2) selon une trajectoire ondulée entre des éléments de support (7) prévus sur des parties d'extrémité, espacées axialement, de la surface principale d'un tambour cylindrique constituant ledit organe rotatif (3), en ce qu'on chauffe le fil en faisant passer un courant électrique entre des éléments de support sélectionnés, situés sur les parties d'extrémité opposées du tambour (3), uniquement peu avant que la partie du fil (2), qui est supportée entre les éléments de support sélectionnés, soit amenée, sous l'effet de la rotation du tambour, en contact avec la matière thermoplastique de manière à y être enrobée, et en ce qu'on dégage ensuite une telle partie du fil, desdits éléments de support sélectionnés de sorte que cette partie reste enrobée par la matière thermoplastique (1).

2. Dispositif pour fabriquer un élément chauffant qui comporte un fil non isolé (2) présentant une résistivité électrique et enrobé dans une feuille d'une matière (1) possédant des propriétés thermoplastiques, ledit dispositif comprenant des moyens de chauffage servant à chauffer le fil (2) en y faisant passer un courant électrique, et un organe rotatif (3) servant à amener le fil en contact avec la matière thermoplastique de manière à enrober le fil chauffé dans cette dernière, caractérisé en ce qu'il est prévu des éléments de support (7) au niveau de parties d'extrémité, espacées axialement, de la surface principale d'un tambour cylindrique constituant ledit organe rotatif (3), en ce qu'il est prévu des moyens pour enrouler le fil (2) selon une trajectoire ondulée entre les éléments de support (7), en ce que les moyens de chauffage sont adaptés pour faire passer un courant électrique entre des éléments de support sélectionnés situés sur des parties d'extrémité opposées du tambour (3) seulement peu avant que la partie du fil (2) qui est supportée entre les éléments de support sélectionnés soit amenée, sous l'effet de la rotation du tambour, en contact avec la matière thermoplastique de manière à y être enrobée, et en ce que les éléments de support sont disposés de manière à dégager ensuite une telle partie du fil afin qu'elle reste enrobée dans la matière thermoplastique (1).

3. Dispositif selon la revendication 2, caractérisé en ce que l'organe rotatif (3) est agencé de manière à coopérer avec un rouleau allongé (10) de manière à enrober le fil (2) dans la matière thermoplastique (1) et en ce que chacun des éléments de support (17) est agencé de manière à se rétracter dans le corps de l'organe rotatif (3) lorsque la partie latérale de la surface principale de l'organe rotatif, au niveau de laquelle l'élément de support est prévu, tourne en coopération avec le rouleau (10).

4. Dispositif selon la revendication 3, caractérisé en ce qu'un élément fixe de guidage (6) est prévu à l'intérieur de l'organe rotatif, l'élément de guidage (6) possédant un profil tel qu'il repousse les éléments de support (7) à l'extérieur lorsque la partie de surface latérale correspondante n'est pas en coopération avec le rouleau (10).

5. Dispositif selon la revendication 4, caractérisé en ce que les organes de support (7) sont sollicités par des moyens élastiques (9) de manière à se rétracter à l'intérieur de l'organe en forme de tambour lorsqu'ils ne sont pas repoussés à l'extérieur par le profil de l'élément de guidage.

Fig.2.

Fig.1.

1

Fig. 3.

Fig. 4.

Fig. 5.